(19) Europäisches Patentamt
European Patent Office
Office européen des brevets

(11) EP 3 887 415 B1

(12) # FASCICULE DE BREVET EUROPEEN

(45) Date de publication et mention de la délivrance du brevet:
**28.12.2022 Bulletin 2022/52**

(21) Numéro de dépôt: **19868175.1**

(22) Date de dépôt: **25.11.2019**

(51) Classification Internationale des Brevets (IPC):
***C08F 293/00** (2006.01)* ***C08G 65/00** (2006.01)*
***C08J 3/24** (2006.01)* ***C08F 212/14** (2006.01)*
***C08L 53/00** (2006.01)* ***H01M 6/18** (2006.01)*
***C08F 299/02** (2006.01)*

(52) Classification Coopérative des Brevets (CPC):
(C-Sets disponibles)
**C08F 293/005; C08G 65/3322; C08G 65/3348; C08G 65/337; C08G 81/025; C08J 5/2268; C08L 53/00; H01M 10/052; H01M 10/0565;**
C08F 212/20; C08F 212/22; C08F 212/26; C08F 212/30; C08F 2438/02; C08J 2325/18;

(Cont.)

(86) Numéro de dépôt international:
**PCT/FR2019/052802**

(87) Numéro de publication internationale:
**WO 2020/109711 (04.06.2020 Gazette 2020/23)**

(54) **ÉLECTROLYTE POLYMÈRE POUR BATTERIE LITHIUM MÉTAL POLYMÈRE À PERFORMANCES AMELIORÉES**

POLYMERELEKTROLYT FÜR EINE LITHIUMMETALL-POLYMERBATTERIE MIT VERBESSERTER LEISTUNG

POLYMER ELECTROLYTE FOR A LITHIUM METAL POLYMER BATTERY HAVING IMPROVED PERFORMANCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.11.2018 FR 1871953**

(43) Date de publication de la demande:
**06.10.2021 Bulletin 2021/40**

(73) Titulaires:
- **Blue Solutions**
  **29500 Ergué Gabéric (FR)**
- **Institut Polytechnique de Grenoble**
  **38031 Grenoble Cedex (FR)**
- **Aix-Marseille Université**
  **13284 Marseille Cedex 07 (FR)**
- **Centre national de la recherche scientifique**
  **75016 Paris (FR)**

(72) Inventeurs:
- **DESCHAMPS, Marc**
  **29000 QUIMPER (FR)**
- **LECUYER, Margaud**
  **29120 COMBRIT (FR)**
- **BOUCHET, Renaud**
  **38700 LA TRONCHE (FR)**
- **PAVLENKO, Ekaterina**
  **38000 GRENOBLE (FR)**
- **LASSAGNE, Adrien**
  **38610 GIERES (FR)**
- **GIGMES, Didier**
  **13190 ALLAUCH (FR)**
- **FERRAND, Adèle**
  **13090 AIX-EN-PROVENCE (FR)**
- **TRANG, Phan**
  **13009 MARSEILLE (FR)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(74) Mandataire: **IPAZ**
**Bâtiment Platon**
**Parc Les Algorithmes**
**91190 Saint-Aubin (FR)**

(56) Documents cités:
**EP-A1- 0 424 827** **WO-A1-2010/083330**
**FR-A1- 2 979 630** **FR-A1- 3 049 114**
**US-A1- 2015 263 382**

- **RENAUD BOUCHET ET AL: "Single-ion BAB triblock copolymers as highly efficient electrolytes for lithium-metal batteries", NATURE MATERIALS, vol. 12, no. 5, 31 mars 2013 (2013-03-31), pages 452-457, XP055316945, GB ISSN: 1476-1122, DOI: 10.1038/nmat3602**

(52) Classification Coopérative des Brevets (CPC):
(Cont.)
H01M 2300/0082; Y02E 60/10

C-Sets
**C08L 53/00, C08L 71/02**

## Description

La présente invention concerne un copolymère réticulé comprenant au moins des unités récurrentes de poly(oxyde d'alkylène) et au moins des unités récurrentes de polystyrène-sulfonyl(trifluorométhylsulfonyl)imide de lithium (PSTFSILi), l'utilisation d'un tel copolymère réticulé pour la préparation d'un électrolyte polymère solide, un électrolyte polymère solide comprenant ledit copolymère réticulé, et une batterie, par exemple Lithium Métal Polymère (LMP), comprenant ledit électrolyte polymère solide.

L'invention s'applique typiquement et non exclusivement au domaine des batteries Lithium Métal Polymère, notamment pour la production de véhicules électriques et/ou le stockage des énergies intermittentes de type solaire et/ou éolien.

Les batteries Lithium Métal Polymère actuellement sur le marché se présentent sous la forme d'un film mince enroulé plusieurs fois ou de plusieurs films minces empilés. Ce film mince enroulé ou empilé a une épaisseur de l'ordre d'une centaine de micromètres et comprend : une électrode négative (anode) assurant la fourniture des ions lithiums lors de la décharge ; une électrode positive (cathode) agissant comme un réceptacle où les ions lithiums viennent s'intercaler ; un électrolyte polymère solide conducteur des ions lithium et situé entre l'électrode positive et l'électrode négative ; et un collecteur de courant relié à l'électrode positive pour assurer la connexion électrique. L'électrode négative est généralement constituée d'une feuille de lithium métallique ou d'un alliage de lithium ; l'électrolyte polymère solide est généralement composé d'un polymère à base de poly(oxyde d'éthylène) (POE) et d'au moins un sel de lithium ; l'électrode positive comprend habituellement une matière active d'électrode, par exemple à base d'oxyde de métal ou à base de phosphate de type $LiMPO_4$ où M représente un cation métallique sélectionné parmi le groupe Fe, Mn, Co, Ni et Ti, et une des combinaisons de ces cations, et éventuellement de carbone ; de plus le collecteur de courant est généralement constitué d'une feuille de métal. La conductivité des ions est assurée par la dissolution du sel de lithium dans le POE. Le POE n'a toutefois pas une tenue mécanique suffisante aux températures habituellement mises en œuvre dans une batterie LMP (60-80°C) puisqu'il devient un liquide visqueux et perd sa stabilité dimensionnelle à ces températures.

D'autres (co)polymères à base de POE ont été décrits, tels que des copolymères statistiques de type poly(oxyde d'éthylène-stat-oxyde de propylène) (i.e. POE-stat-PPO), des copolymères à bloc de type polystyrène-b-POE (i.e. PS-b-POE), des POE réticulés ou des copolymères comprenant des chaînes acrylates ou méthacrylates sur lesquelles sont branchées du POE, notamment afin de renforcer les propriétés mécaniques. Il a également été proposé d'ajouter au polymère à base de POE des particules inorganiques ou organiques, éventuellement nanométriques, telles que des particules d'oxyde d'aluminium, d'oxyde de titane ou des nano-fibrilles de cellulose. Toutefois, les conductivités ioniques à 60°C des électrolytes à base de tels polymères restent faibles. Seule l'utilisation d'électrodes positives ayant un faible grammage en matière active (faible capacité de surface) et de faibles courants (< C/15) permettent de récupérer une capacité à cette température. La température de fonctionnement des batteries actuellement sur le marché est donc de 80°C pour obtenir des performances en accord avec les applications visées.

Par ailleurs, des essais d'amélioration de la conductivité du POE par ajout de plastifiants ont conduit à détériorer les propriétés mécaniques.

Enfin, dans les électrolytes polymères solides constitués d'un sel de lithium dissous dans une matrice polymère polyéther tels que le POE dopé au sel de lithium, la fraction de la charge portée par les ions lithium (également appelé nombre de transport cationique) est faible (de l'ordre de 0,2), du fait de la forte interaction entre le cation lithium et les chaînes de POE, ce qui limite les performances électriques. La valeur du nombre de transport cationique détermine la part de courant transporté par le cation. Un nombre de transport cationique faible entraîne la formation d'un gradient de concentration en sel dans l'épaisseur de l'électrolyte lors du fonctionnement de la batterie. Ce comportement génère un appauvrissement en sel à l'électrode, induisant une augmentation de la résistance de l'électrolyte et des performances en puissance diminuées, et favorise la formation de dendrites de lithium, engendrant une baisse du rendement faradique et à terme, des courts-circuits.

Afin de remédier à ce problème, la demande internationale WO 2013/034848 décrit des copolymères di-blocs de type AB ou tri-blocs de type BAB, dans lesquels le bloc A est une chaîne de poly(oxyde d'éthylène) non substituée ayant une masse moléculaire moyenne en nombre inférieure ou égale à 100 kDa et le bloc B est un polymère anionique susceptible d'être préparé à partir d'un ou plusieurs monomères choisis parmi les monomères vinyliques et dérivés, lesdits monomères étant substitués par l'anion d'un sel de sulfonyl(trifluorométhylsulfonyl)imidure de lithium (TFSILi) de formule suivante :

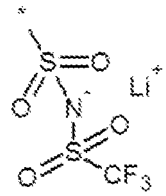

dans laquelle * représente le point d'attachement de l'anion dudit sel audit monomère par l'intermédiaire d'une liaison covalente ou d'une chaîne alkyle linéaire ayant de 1 à 5 atomes de carbone. Toutefois, les copolymères di-blocs de type AB ou tri-blocs de type BAB à base de POE précités, bien qu'ayant un nombre de transport égal à 1, ont une conductivité ionique plus faible que le POE seul. Par ailleurs, leur tenue mécanique n'est pas optimisée.

Le but de la présente invention est de pallier tout ou partie des inconvénients de l'art antérieur précité et de fournir un matériau polymère, pouvant être utilisé dans une batterie, notamment une batterie LMP, notamment dans un électrolyte polymère solide, ledit matériau polymère présentant de bonnes propriétés en termes de conduction ionique, notamment à une température supérieure ou égale à 60°C, de nombre de transport cationique, et de tenue mécanique. Il est également souhaitable de réduire ou éliminer la croissance dendritique au sein d'une batterie, notamment une batterie LMP, et de garantir de bonnes performances électrochimiques, notamment en termes de tenue au cyclage, de rendement faradique, ladite batterie pouvant être utilisée en toute sécurité.

Ces buts sont atteints par l'invention qui va être décrite ci-après.

L'invention a pour premier objet un copolymère réticulé, caractérisé en ce qu'il comprend au moins des unités récurrentes de polystyrènesulfonyl(trifluorométhylsulfonyl)imide de lithium (PSTFSILi) et au moins des unités récurrentes de poly(oxyde d'alkylène) choisies parmi des unités de poly(oxyde d'éthylène), des unités de poly(oxyde de propylène), des unités de poly(oxyde d'éthylène et de propylène), et un de leurs mélanges, et en ce que ledit copolymère réticulé est obtenu par réticulation d'un copolymère tri-bloc de type BAB, dans lequel :

- le bloc A est un poly(oxyde d'alkylène) réticulable susceptible d'être obtenu à partir :

  * d'au moins un monomère choisi parmi l'éthylène glycol, le propylène glycol, et leur mélange, ou d'au moins un oligomère de poly(oxyde d'alkylène) choisi parmi les poly(oxyde d'éthylène), les poly(oxyde de propylène), les poly(oxyde d'éthylène et de propylène), et un de leurs mélanges,
  et

  * d'au moins un composé comprenant au moins une fonction réticulable alcène ou alcyne, et

- chacun des blocs B est un polystyrène anionique substitué par l'anion d'un sel de sulfonyl(trifluorométhylsulfonyl)imidure de lithium (TFSILi) et répondant à la formule (I) suivante :

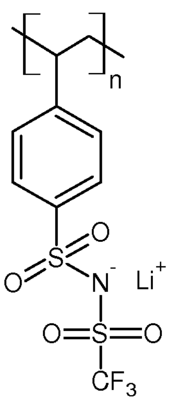

**(I)**

dans laquelle n désigne le nombre de motifs de styrènesulfonyl(trifluorométhylsulfonyl)imide de lithium pour chacun des blocs B.

Grâce à l'association des unités récurrentes de poly(oxyde d'alkylène) et des unités récurrentes de polystyrène-sulfonyl(trifluorométhylsulfonyl)imide de lithium, et à la réticulation, ledit copolymère réticulé présente de bonnes propriétés en termes de nombre de transport cationique, de conduction ionique et de tenue mécanique, pour pouvoir être utilisé dans un électrolyte polymère solide et/ou dans une électrode composite, notamment pour une batterie LMP.

Selon l'invention, chaque bloc B comprend de préférence de 4 à 31 motifs de styrène-sulfonyl(trifluorométhylsulfonyl)imide de lithium (STFSILi), et encore plus préférentiellement de 5 à 12 motifs de STFSILi. Une valeur tout particulièrement préférée est de 8 motifs de STFSILi pour chacun des blocs B.

La masse moléculaire moyenne en nombre d'un bloc B va préférentiellement de 1,6 à 3,8 kDa.

Le sel de lithium LiTFSI est directement greffé sur le polystyrène, ce qui permet d'avoir un nombre de transport des cations $Li^+$ égal à 1, tout en garantissant une bonne tenue mécanique et une bonne conduction ionique, notamment de par la réticulation et la présence des poly(oxyde d'alkylène) répartis uniformément dans le copolymère.

Le copolymère réticulé peut comprendre de 10 à 50% en masse environ de PSTFSILi, et de préférence de 13 à 28% en masse environ de PSTFSILi, par rapport à la masse totale du copolymère réticulé. Une valeur particulièrement préférée est de 22% en masse environ de PSTFSILi.

La masse moléculaire moyenne en nombre du bloc A va préférentiellement de 10 à 50 kDa, et encore plus préférentiellement de 15 à 30 kDa. Une valeur tout particulièrement préférée est de 20 kDa.

Le bloc A a de préférence une masse moléculaire moyenne en nombre inférieure ou égale à 25 kDa.

Selon l'invention, le bloc A comprend de préférence de 227 à 1136 motifs d'oxyde d'alkylène, et encore plus préférentiellement de 340 à 681 motifs d'oxyde d'alkylène. Une valeur tout particulièrement préférée est de 454 motifs d'oxyde d'alkylène.

Le bloc A est de préférence un poly(oxyde d'éthylène) ou un poly(oxyde d'éthylène et de propylène), et de préférence encore un poly(oxyde d'éthylène).

Le bloc A comprend de préférence un polymère fonctionnel de formule (II) suivante :

$$-[COA\text{-}R^1]_p- \qquad (II)$$

dans laquelle $R^1$ est un substituant comprenant au moins une fonction réticulable alcène ou alcyne ; COA est une chaine poly(oxyde d'alkylène) choisie parmi les chaines poly(oxyde d'éthylène), poly(oxyde de propylène), poly(oxyde d'éthylène et de propylène), et un de leurs mélanges, et de préférence choisies parmi les chaines poly(oxyde d'éthylène) et poly(oxyde d'éthylène et de propylène), et de préférence encore choisies parmi les chaines de poly(oxyde d'éthylène) ; et p est compris entre 10 et 50, de préférence entre 6 et 33, et de préférence encore entre 12 et 15.

Le bloc A comprend ainsi des fonctions réticulables uniformément distribuées au sein dudit bloc A.

Les chaines poly(oxyde d'alkylène) COA sont de préférence linéaires.

Le substituant $R^1$ peut être choisi parmi les radicaux alkyles contenant au moins une fonction alcène ou alcyne, ledit substituant $R^1$ comprenant de 4 à 10 atomes de carbone, et de préférence de 4 à 6 atomes de carbone.

Selon une forme de réalisation préférée de l'invention, le polymère fonctionnel de formule (II) répond à la formule (II-a) suivante :

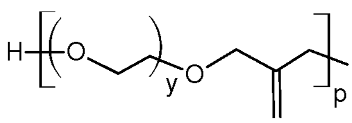

**(II-a)**

dans laquelle y est compris entre 11 et 91, de préférence 17 et 75, et de préférence encore 23 et 45 ; et p est tel que défini dans l'invention.

Selon une forme de réalisation particulièrement préférée de l'invention, le bloc A répond à la formule (II-b) suivante :

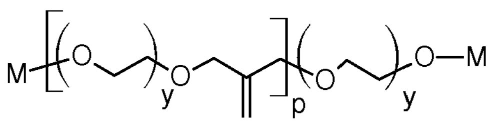

**(II-b)**

dans laquelle y et p sont tels que définis dans l'invention ; M est un substituant comprenant un amorceur radicalaire

capable d'amorcer la polymérisation des monomères de styrènesulfonyl(trifluorométhylsulfonyl)imide de lithium du bloc B et de permettre la formation d'une liaison covalente entre le bloc A et le bloc B.

L'amorceur radicalaire dans le substituant M peut être choisi parmi les alcoxyamines, et des amorceurs radicalaires contrôlés à base de nitroxydes.

Grâce à l'amorceur radicalaire, par exemple de type alcoxyamine, la polymérisation des monomères de styrènesulfonyl(trifluorométhylsulfonyl)imide de lithium est assurée de manière contrôlée, permettant ainsi de former le bloc B tout en le liant avec le bloc A.

Le substituant M peut être choisi parmi les alcoxyamines. La liaison C-O de l'alcoxyamine peut se rompre homolytiquement sous l'action de la température, et générer un nitroxyde jouant le rôle de contrôleur de la réaction de polymérisation et un radical amorceur qui s'additionne sur le monomère.

En particulier, le substituant M répond à la formule (III) suivante :

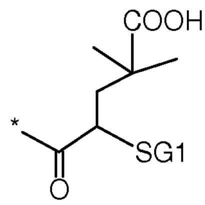

**(III)**

dans laquelle * désigne le point d'attachement de M à l'oxygène terminal dans le bloc A de formule (II-b), et SG1 désigne un radical nitroxyde de formule suivante :

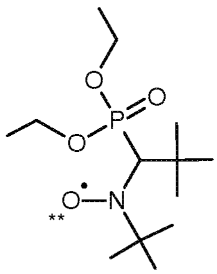

**SG1**

dans laquelle ** désigne le point d'attachement de SG1 au radical - CH- de M de formule (III).

Dans le copolymère réticulé conforme à l'invention, le rapport du nombre de moles d'oxyde d'alkylène sur le nombre de moles de STFSILi (OA/Li) [respectivement le rapport du nombre de moles d'oxyde d'éthylène sur le nombre de moles de STFSILi (OE/Li)], va de préference de 7 à 65, de préference encore de 10 à 50, et de manière tout particulièrement préférée de 15 à 25.

Le composé comprenant une fonction réticulable alcène ou alcyne peut être choisi parmi les composés de formule (IV) suivante :

$$X\text{-}R'^{1}\text{-}X' \qquad (IV)$$

dans laquelle $R'^1$ est un groupe alkyle contenant au moins une fonction alcène ou alcyne, ledit groupe alkyle comprenant de 4 à 10 atomes de carbone, et de préférence de 4 à 6 atomes de carbone ; et X et X', identiques ou différents, sont choisis indépendamment l'un de l'autre, parmi les fonctions halogène, acide carboxylique, chlorure d'acide, ester et aldéhyde.

X et X' sont de préference identiques.

Selon une forme de réalisation particulièrement préférée, X et X' sont des halogènes, et de préférence encore des atomes de chlore.

À titre d'exemple, le composé comprenant une fonction réticulable alcène ou alcyne est le 3-chloro-2-chloro-1-propène.

Le bloc A est susceptible d'être obtenu à partir d'au moins un monomère choisi parmi l'éthylène glycol, le propylène glycol, et leur mélange, ou d'au moins un oligomère de poly(oxyde d'alkylène) choisi parmi les poly(oxyde d'éthylène), les poly(oxyde de propylène), les poly(oxyde d'éthylène et de propylène), et un de leurs mélanges, et d'au moins un composé comprenant au moins une fonction réticulable alcène ou alcyne, de préférence par polycondensation.
L'oligomère poly(oxyde d'alkylène) peut comprendre des groupes terminaux de type hydroxyle (-OH), thiol (-SH), amine primaire ($-NH_2$) ou secondaire ($-NHR^2$, $R^2 = -CH_3$ ou $-C_2H_5$), et de préférence de type hydroxyle ou amine primaire.
L'oligomère d'(oxyde d'alkylène) peut avoir une masse molaire inférieure ou égale à 5000 g/mol environ, de préférence allant de 700 à 4000 g/mol environ, et de manière encore plus préférée allant de 1000 à 2000 g/mol environ.
Selon une forme de réalisation de l'invention, l'oligomère d'(oxyde d'alkylène) est choisi parmi les oligomères de formules suivantes :

* $H-[O-(CH_2)_x]_{y'}-OH$, dans laquelle $2 \leq x \leq 4$, et de préférence x = 2 ; et $10 \leq y' \leq 91$, de préférence $17 \leq y' \leq 75$, et de préférence encore $23 \leq y' \leq 45$,

* $H-[O-CH_2-CHR^3]_{y''}-OH$, dans laquelle $R^3$ est un groupe alkyle ayant de 1 à 3 atomes de carbone, et de préférence un groupe méthyle ; et $7 \leq y'' \leq 69$, de préférence $10 \leq y'' \leq 34$, et de préférence encore $17 \leq y'' \leq 27$,

* $H-[O-(CH_2)_z-O-(CH_2-CHR^4)_u]_w-OH$, dans laquelle $1 \leq z \leq 4$, et de préférence z = 1 ou 2 ; $1 \leq u \leq 2$, et de préférence u = 1 ; w étant tel que la masse molaire de l'oligomère va de 700 à 4000 g/mol environ, et de préférence de 1000 à 2000 g/mol environ, et de préférence encore $2 \leq w \leq 23$ ; et $R^4$ est un atome d'hydrogène ou un groupe alkyle ayant de 1 à 3 atomes de carbone, et de préférence un atome d'hydrogène ou un groupe méthyle ; étant entendu que les chaînes aliphatiques $-(CH_2)_z-$ et $-(CH_2-CHR^3)_u-$ sont différentes,

* $NH_2-CHR^5-CH_2-[O-CH_2-CHR^5]_{w'}-NH_2$, dans laquelle $R^5$ est un groupe alkyle ayant de 1 à 3 atomes de carbone, et de préférence un groupe méthyle ; et $5 \leq w' \leq 69$, de préférence $12 \leq w' \leq 52$, et de préférence encore $17 \leq w' \leq 35$, ces oligomères pouvant être commercialisés sous le nom de Jeffamines® dans une large gamme de w lorsque $R^5$ est un méthyle, et

* $NH_2-CHR^6-CH_2-O-[CH_2-CH_2-O]_{w''}-CH_2-CHR^6-NH_2$, dans laquelle $R^6$ est un groupe alkyle ayant de 1 à 3 atomes de carbone, et de préférence un groupe méthyle ; et $7 \leq w'' \leq 91$, de préférence $17 \leq w'' \leq 68$, et de préférence encore $23 \leq w'' \leq 45$.

L'oligomère d'(oxyde d'alkylène) est de préférence choisi parmi les oligomères de formule $H-[O-(CH_2-CH_2)]_{y'}-OH$ telle que définie dans l'invention.
L'oligomère d'(oxyde d'alkylène) est de préférence un oligomère d'(oxyde d'éthylène), notamment de masse molaire allant de 750 à 4000 g/mol environ, et de préférence encore allant de 1000 à 2000 g/mol environ.
Le copolymère réticulé conforme à l'invention peut être préparé par un procédé comprenant les étapes suivantes :

i) la préparation d'un poly(oxyde d'alkylène) réticulable tel que défini dans l'invention, et
ii) la copolymérisation du poly(oxyde d'alkylène) réticulable de l'étape i) avec un monomère styrène-sulfonyl(trifluorométhylsulfonyl)imide de lithium (STFSILi).

L'étape i) peut en particulier comprendre les sous-étapes suivantes :

i-a) la polycondensation d'un oligomère d'(oxyde d'alkylène) tel que défini dans l'invention avec au moins un composé comprenant une fonction réticulable alcène ou alcyne tel que défini dans l'invention, et

i-b) la fonctionnalisation du poly(oxyde d'alkylène) réticulable obtenu à la sous-étape i-a), avec un substituant M tel que défini précédemment.

Selon une forme de réalisation particulièrement préférée de l'invention, la sous-étape i-a) met en œuvre le 3-chloro-2-chloro-1-propène et l'oligomère de formule $H-[O-(CH_2)_x]_{y'}-OH$ telle que définie dans l'invention, le 3-chloro-2-chloro-1-propène étant en défaut par rapport à l'oligomère, pour former un poly(oxyde d'alkylène) réticulable de formule suivante :

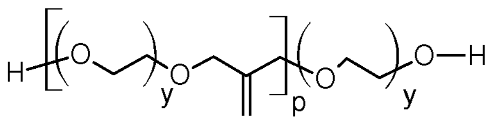

**(II-c)**

dans laquelle y et p sont tels que définis dans l'invention.

La polycondensation est généralement effectuée dans un solvant tel que le THF, en présence d'une base forte telle que de l'hydroxyde de potassium.

La sous-étape i-b) peut comprendre le remplacement des fonctions hydroxyles terminales par des fonctions acrylates, notamment en présence de chlorure d'acryloyle et de triéthylamine en excès, dans un solvant tel que le THF ; suivi de l'addition radicalaire d'un alcoxyamine MAMA-SG1 de formule suivante :

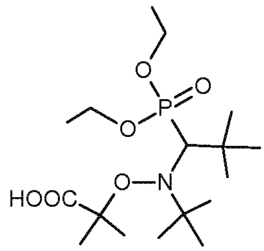

**MAMA-SG1** ,

notamment dans un solvant tel que l'éthanol.

La sous-étape i-b) peut permettre ainsi de former le poly(oxyde d'alkylène) réticulable de formule (II-b) telle que définie dans l'invention.

L'étape ii) de copolymérisation peut être effectuée par polymérisation radicalaire contrôlée, notamment par polymérisation NMP (*« nitroxyde-Mediated Radical Polymerization »).*

L'étape ii) est de préférence réalisée dans un solvant polaire tel que le N,N-diméthylformamide (DMF), le diméthylsulfoxyde (DMSO), ou l'eau, notamment à une température allant de 90 à 120°C, en particulier pendant une durée de 2 à 20 heures.

L'invention a pour deuxième objet l'utilisation d'au moins un copolymère réticulé tel que défini dans le premier objet de l'invention, pour la préparation d'un électrolyte polymère solide, notamment dans une batterie au lithium, et en particulier dans une batterie au lithium métal.

L'utilisation du copolymère réticulé conforme à la présente invention pour la préparation d'un électrolyte polymère solide, notamment dans une batterie au lithium métal, conduit à un dispositif de stockage de l'énergie présentant d'excellentes performances à basse température (environ 60°C), en particulier un nombre de transport des ions lithium de l'ordre de 1, et une conductivité ionique supérieure ou égale à $10^{-5}$ $S.cm^{-1}$ à 60°C. Le nombre de transport élevé permet de limiter la formation de gradient de concentration dans l'électrolyte au cours de la décharge (respectivement de la charge) permettant d'augmenter les performances en puissance (respectivement la vitesse de la charge). L'utilisation de ce copolymère réticulé permet également de limiter la croissance dendritique du lithium, et ainsi d'envisager des recharges rapides et sûres. En effet, le problème de la technologie des batteries lithium métal est la formation d'électro-dépôts hétérogènes de lithium (dont les dendrites) au cours de la recharge ce qui diminue la cyclabilité et peut entrainer des courts-circuits. Le copolymère réticulé conforme à la présente invention présente également une bonne tenue mécanique, une grande stabilité thermique (qui assure la sécurité des dispositifs de stockage d'énergie les comprenant), et une stabilité en potentiel améliorée (e.g. stabilité jusqu'à 4,5 V vs $Li^+/Li$).

L'invention a pour troisième objet un électrolyte polymère solide, caractérisé en ce qu'il comprend au moins un copolymère réticulé tel que défini dans le premier objet, et au moins un plastifiant.

L'électrolyte polymère solide de l'invention présente une tenue mécanique optimisée, facilitant notamment sa mise en œuvre et sa manipulation. Par ailleurs, il présente un nombre de transport cationique égal à 1 et une bonne conductivité ionique, induisant une bonne résistance à la croissance dentritique.

Le plastifiant peut être choisi parmi les carbonates linéaires et cycliques tels que le carbonate de propylène, le carbonate d'éthylène ou le diméthylcarbonate ; les carbonates fluorés tels que le fluoroéthylène carbonate ; les nitriles tels que le succinonitrile ; les lactones telles que la γ-butyrolactone ; les polyéthers linéaires ou cycliques liquides ; les

polyéthers fluorés ; et un de leurs mélanges.

En effet, le copolymère réticulé de l'invention est capable d'absorber un plastifiant, tout en conservant une bonne tenue mécanique et en restant solide. Par ailleurs, la présence du plastifiant permet d'obtenir un électrolyte polymère solide ayant une conductivité ionique améliorée (e.g. conductivité d'au moins $1\times10^{-5}$ S/cm à 60°C).

Le polyéther linéaire ou cyclique liquide a de préférence une masse molaire inférieure ou égale à 10 000 $g{\cdot}mol^{-1}$ environ, de préférence inférieure ou égale à 2000 $g{\cdot}mol^{-1}$ environ, et de préférence encore inférieure ou égale à 600 $g{\cdot}mol^{-1}$ environ.

Le polyéther linéaire ou cyclique liquide peut être choisi parmi :

* les polyéthylènes glycols de formule $H\text{-}[O\text{-}CH_2\text{-}CH_2]_q\text{-}OH$, dans laquelle q est compris entre 1 et 13,

* les éthers de glycol de formule $R^7\text{-}[O\text{-}CH_2\text{-}CH_2]_{q'}\text{-}O\text{-}R^{7'}$, dans laquelle q' est compris entre 1 et 13 et $R^7$ et $R^{7'}$, identiques ou différents, sont des groupes alkyle linéaires, ramifiés ou cycliques, pouvant comprendre de 1 à 10 atomes de carbone,

* les éthers de formule $R^8\text{-}[CH_2\text{-}O]_{q''}\text{-}R^{8'}$, dans laquelle q" est compris entre 1 et 13, $R^8$ et $R^{8'}$, identiques ou différents, sont des groupes alkyle linéaires, ramifiés ou cycliques, pouvant comprendre de 1 à 10 atomes de carbone et éventuellement des hétéroatomes,

* les éthers cycliques pouvant comprendre de 2 à 20 atomes de carbone, les polyéthers cycliques pouvant comprendre de 3 à 40 atomes de carbone, et

* un de leurs mélanges.

Le(s) polyéther(s) utilisé(s) dans l'électrolyte de l'invention est (sont) particulièrement stable(s) vis-à-vis du lithium.

Dans un mode de réalisation préféré, le plastifiant est un polyéther linéaire ou cyclique liquide, et de manière préférentielle est choisi parmi le tétra éthylène glycol diméthyléther (TEGDME) de formule $CH_3O\text{-}(CH_2\text{-}CH_2)_4\text{-}OCH_3$ (i.e. $R^7$, $R^{7'} = CH_3$ et q' = 4) ou le tétra éthylène glycol (TEG) de formule $H\text{-}(O\text{-}CH_2\text{-}CH_2)_4\text{-}OH$ (i.e. q = 4).

L'électrolyte polymère solide conforme à la présente invention peut en particulier se présenter sous toute forme appropriée, par exemple sous forme d'une feuille, d'un film ou d'une membrane. L'électrolyte polymère solide conforme à l'invention peut être préparé par toute technique connue de l'homme du métier telle que par exemple par enduction ou par extrusion.

L'électrolyte polymère solide conforme à la présente invention peut comprendre de 60 à 90% en masse environ de copolymère réticulé, et de préférence de 75 à 85% en masse environ de copolymère réticulé, par rapport à la masse totale de l'électrolyte polymère solide.

L'électrolyte polymère solide conforme à la présente invention peut comprendre de 10 à 40% en masse environ de plastifiant, et de préférence de 15 à 25% en masse environ de plastifiant, par rapport à la masse totale de l'électrolyte polymère solide. Cela permet ainsi de garantir un fonctionnement de la batterie LMP mettant en œuvre un tel électrolyte, avec une conductivité ionique optimale.

Enfin, l'invention a pour quatrième objet une batterie, notamment une batterie LMP, comprenant :

- une électrode négative comprenant du lithium métal ou un alliage de lithium métal,

- une électrode positive, éventuellement supportée par un collecteur de courant, et

- un électrolyte polymère solide positionné entre l'électrode positive et l'électrode négative,
caractérisée en ce que l'électrolyte polymère solide est tel que défini dans le troisième objet de l'invention.

L'électrode positive composite peut comprendre :

- au moins une matière active d'électrode positive,

- au moins un liant polymère,

- éventuellement au moins un agent de conduction électronique, et

- éventuellement au moins un plastifiant.

L'électrode positive composite peut comprendre au moins 50% en masse environ de matière active d'électrode positive, et de préférence de 55 à 85% en masse environ de matière active d'électrode positive, par rapport à la masse totale de ladite électrode positive composite.

La matière active d'électrode positive peut être choisie parmi les phosphates de lithium, et en particulier $LiFePO_4$, $Li_3V_2(PO_4)_3$, $LiCoPO_4$, $LiMnPO_4$, $LiNiPO_4$ ; les oxydes de lithium tels que par exemple $LiNiO_2$, $LiCoO_2$ et $LiMn_2O_4$ et leurs mélanges.

Parmi ces matières actives, $LiFePO_4$ est tout particulièrement préféré.

Selon une forme de réalisation particulière, l'électrode positive composite comprend de 10 à 40% en masse environ de liant polymère, et de préférence de 13 à 20% en masse environ de liant polymère, par rapport à la masse totale de l'électrode positive composite.

Le liant polymère peut être un copolymère tri-bloc de type BAB tel que défini dans l'invention (i.e. sans réticulation), ou un matériau choisi parmi les homopolymères et copolymères d'éthylène ; les homopolymères et copolymères de propylène ; les homopolymères et les copolymères d'oxyde d'éthylène (e.g. POE, copolymère du POE), d'oxyde de méthylène, d'oxyde de propylène, d'épichlorhydrine, d'allylglycidyléther, et leurs mélanges ; les polymères halogénés tels que les homopolymères et les copolymères de chlorure de vinyle, de fluorure de vinylidène (PVdF), de chlorure de vinylidène, de tétrafluorure d'éthylène, ou de chlorotrifluoroéthylène, les copolymères de fluorure de vinylidène et de hexafluoropropylène (PVdF-co-HFP) ou leurs mélanges ; les polymères non conducteurs électroniques de type anionique tels que le poly(styrène sulfonate), le poly(acide acrylique), le poly(glutamate), l'alginate, la pectine, la gélatine ou leurs mélanges ; les polymères de type cationique tels que le polyéthylèneimine (PEI), la polyaniline sous forme de sel éméraldine (ES), le poly(N-vinylimidazole quaternisé), le poly(acrylamide-co-chlorure de diallyldiméthyl ammonium) (AMAC) ou leurs mélanges ; les polyacrylates ; et un de leurs mélanges.

Selon une forme de réalisation particulièrement préférée de l'invention, le liant polymère est un copolymère tri-bloc de type BAB tel que défini dans l'invention (i.e. sans réticulation). Grâce au copolymère tri-bloc de type BAB tel que défini dans l'invention présent dans l'électrode positive composite, la formation d'un gradient de concentration dans l'épaisseur de l'électrode positive lors du cyclage, peut être réduite, voire supprimée, induisant une amélioration des performances en puissance de la batterie ou la possibilité d'augmenter le grammage de l'électrode positive.

L'électrode positive composite peut comprendre de 0,05 à 10% en masse environ d'agent générant une conductivité électronique, et de préférence de 0,2 à 5% environ en masse d'agent générant une conductivité électronique, par rapport à la masse totale de l'électrode positive composite.

L'agent générant une conductivité électronique convenant pour la présente invention est de préférence choisi parmi le noir de carbone, le carbone SP, le noir d'acétylène, les fibres et nanofibres de carbone, les nanotubes de carbone, le graphène, le graphite, les particules et fibres métalliques, et un de leurs mélanges.

L'agent générant une conductivité électronique est de préférence le noir de carbone.

De préférence, l'agent générant une conductivité électronique est sous forme de particules sphériques (i.e. sous forme de billes) afin de favoriser la conduction notamment dans le sens perpendiculaire à l'électrode positive composite (i.e. dans le sens de son épaisseur) et ainsi de favoriser les processus électrochimiques au sein de l'électrode. En effet, les particules d'agent générant une conductivité électronique sous forme sphériques ont une propension à former des réseaux conducteurs tridimensionnels.

À titre d'exemple de noir de carbone, on peut citer les noirs de carbone commercialisés sous les références : Ketjenblack 600JD®, Ketjenblack 700JD® et Timcal Ensaco 350G®.

L'électrode positive composite peut comprendre en outre au moins un plastifiant, ledit plastifiant pouvant être tel que défini dans la présente invention. Le plastifiant de l'électrode positive est de préférence un polyéther linéaire ou cyclique liquide tel que défini dans l'invention ou un carbonate linéaire, cyclique ou fluoré tel que défini dans l'invention.

L'électrode positive composite peut comprendre de 2 à 10% en masse environ de plastifiant, et de préférence de 3 à 5% en masse environ de plastifiant, par rapport à la masse totale de l'électrode positive composite.

Il convient de noter que la masse totale de l'électrode positive composite comprend la masse de la matière active, la masse du liant polymère, éventuellement la masse de l'agent générant une conductivité électronique et éventuellement la masse du plastifiant s'ils sont présents.

Selon une forme de réalisation préférée de l'invention, le grammage de l'électrode positive (c'est à dire la quantité de matière active d'électrode positive/$cm^2$/face) va de 1 à 3 mAh/$cm^2$.

L'électrode positive composite peut être préparée de la façon suivante :

a) en mélangeant la matière active d'électrode positive avec le liant polymère, éventuellement l'agent générant une conductivité électronique, éventuellement le plastifiant, et éventuellement au moins un solvant dudit liant polymère, pour obtenir une pâte d'électrode,

b) en appliquant ladite pâte d'électrode sur au moins un support,

c) en séchant ladite pâte d'électrode pour obtenir une électrode positive composite sous forme de film supporté.

L'étape a) peut être réalisée par extrusion ou par broyage.

L'extrusion est très avantageuse puisqu'elle permet d'obtenir facilement des électrodes peu poreuses tout en utilisant peu de solvant. Elle permet également d'éviter une étape de calandrage sur l'électrode sèche qui peut engendrer des modifications de structure de l'électrode, nuire au bon enrobage des grains de l'agent générant une conductivité électronique et ainsi peut induire un effondrement de l'électrode au cours du cyclage. Enfin, l'étape de calandrage présente l'inconvénient d'augmenter le nombre d'étapes pour obtenir l'électrode et ainsi son coût de production.

Le solvant du liant polymère de l'étape a) permet de solubiliser ledit liant polymère.

Lorsqu'il est présent, ledit solvant représente de préférence moins de 50% en masse environ de la masse totale du mélange de la matière active d'électrode positive, de liant polymère, éventuellement d'agent générant une conductivité électronique, et éventuellement de plastifiant.

L'utilisation lors de la fabrication de l'électrode positive composite d'une faible quantité de solvant du liant polymère permet de conduire à une électrode positive de faible porosité (i.e. $\leq$ 10% en volume environ). Cette faible porosité permet de contrôler et d'optimiser la quantité de matière active présente dans l'électrode positive composite, et ainsi de parvenir à des densités volumiques d'énergie optimales.

Le solvant de l'étape a) peut être choisi parmi l'eau ; la *N*-méthylpyrrolidone ; les carbonates tels que le carbonate d'éthylène, le carbonate de propylène, le carbonate de diméthyle, le carbonate de diéthyle ou le carbonate de méthyle et d'éthyle ; l'acétone ; les alcools tels que le méthanol, l'éthanol ou le propanol ; et un de leurs mélanges.

L'étape b) peut être réalisée par laminage ou par enduction.

Le support peut être un collecteur de courant et/ou un film de support.

À titre d'exemple de collecteur de courant, on peut citer un collecteur de courant en aluminium recouvert d'une couche à base de carbone (couche anticorrosion).

À titre d'exemple de film de support, on peut citer un film plastique de type polyéthylène téréphtalate (PET) siliconé.

Le film supporté d'électrode positive obtenu à l'issue de l'étape c) peut avoir une épaisseur allant de 2 à 100 $\mu$m environ, et de préférence de 10 à 60 $\mu$m environ.

L'étape c) peut être réalisée à une température suffisante pour permettre d'éliminer le solvant de l'étape a).

La température de fonctionnement de la batterie est de 60 à 100°C environ.

Grâce à l'utilisation d'un copolymère réticulé conforme à l'invention au moins dans l'électrolyte polymère solide, la température de fonctionnement de la batterie peut être abaissée.

Les performances de la batterie de l'invention à 60°C sont supérieures, à haut régime (e.g. (>C/2)), et similaires à bas régime (e.g. (C/10)), à celles des batteries disponibles sur le marché dont la température de fonctionnement est de 80°C, soit un gain de 20°C à performances égales, voire supérieures.

La présente invention est illustrée par les exemples de réalisation suivants, auxquels elle n'est cependant pas limitée.

**Brève description des dessins**

Les dessins annexés illustrent l'invention :

La figure 1 représente le module de Young (en MPa), en fonction du taux massique de PSTFSILi de matériaux conformes et non conformes à l'invention.

La figure 2 représente la variation de la conductivité ionique (en S/cm) en fonction du rapport 1000/T, T étant la température en Kelvin pour des matériaux conformes et non conformes à l'invention.

La figure 3 représente la température de transition vitreuse (en °C) en fonction du taux massique de PSTFSILi de matériaux conformes et non conformes à l'invention.

La figure 4 représente la température de fusion (en °C) en fonction du taux massique de PSTFSILi de matériaux conformes et non conformes à l'invention.

La figure 5 représente la tension d'une électrode positive composite conforme à l'invention (en volts) en fonction de la capacité en décharge (en mAh) à 60°C et à différents régimes (de D/9,4 à D/0,9), la charge étant toujours de C/9,4.

La figure 6 représente la courbe de la capacité en décharge (en mAh) et l'efficacité coulombique (en %), en fonction

du nombre de cycles, à 60°C et à différents régimes de décharge (de D/9,4 à D/0,9), la charge étant toujours de C/9,4.

La figure 7 représente les performances en puissance de deux batteries LMP conforme et non conforme à l'invention.

## Exemples

Les matières premières utilisées dans les exemples sont listées ci-après :

- noir de carbone Ketjenblack EC600JD, AkzoNobel
- $LiFePO_4$, Pulead,
- PVDF-co-HFP, Solvay
- homo-POE, Sumitomo Seika
- LiTFSI, Solvay
- collecteur de courant en aluminium recouvert d'une couche de carbone, Armor
- feuille de lithium métal, Blue Solutions
- oligomère de POE, PEG2000, sigma-aldrich,
- 3-chloro-2-chloro-1-propène,
- TEGDME, sigma-aldrich
- hydroxyde de potassium (KOH),
- tetrahydrofurane (THF),
- éther diéthylique,
- acétonitrile,
- eau,
- chlorure d'acryloyle,
- triéthylamine,
- diméthylformamide (DMF),
- 2-Hydroxy-4'-(2-hydroxyéthoxy)-2-méthylpropiophénone : photoamorceur Irgacure 2959
- Nitroxyde SG1 et alcoxyamine MAMA-SG1 de formules suivantes :

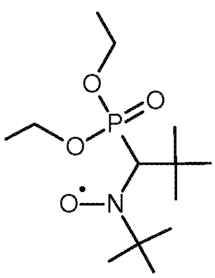

SG1

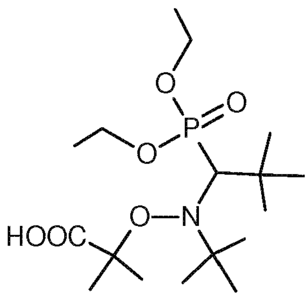

MAMA-SG1

Sauf indications contraires, tous les matériaux ont été utilisés tels que reçus des fabricants.

**Exemple 1 : préparation de copolymères réticulés conformes au premier objet de l'invention**

Préparation d'un poly(oxyde d'éthylène) réticulable précurseur du bloc A

*Préparation d'un poly(oxyde d'éthylène) réticulable : sous-étape i-a) telle que définie dans l'invention*

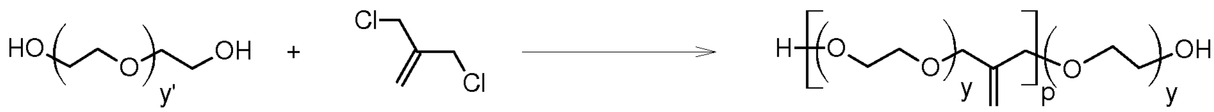

127,6 g d'un oligomère de POE de 1,5 kDa et 9,5 g de KOH sont dissous dans 200 ml de tétrahydrofurane (THF) à 40°C. Lorsque la solution est homogène, 10 g de 3-chloro-2-chloro-1-propène dissous dans 20 ml de THF sont ajoutés dans la solution d'oligomère de POE précédemment préparée. La réaction de polycondensation a été mise en œuvre à 40°C pendant 3 jours. Le 3-chloro-2-chloro-1-propène étant en défaut, le poly(oxyde d'éthylène) réticulable obtenu est terminé par des fonctions hydroxyles.

Le milieu réactionnel a ensuite été refroidi, centrifugé, puis le surnageant a été précipité dans l'éther diéthylique. La purification est complétée par une ultrafiltration pour éliminer les polymères de faible masse molaire et les sels qui n'ont pas été éliminés dans l'étape de centrifugation. L'eau est éliminée par évaporation rotative et le produit est séché sous vide.

*Préparation d'un poly(oxyde d'éthylène) réticulable : sous-étape i-b) telle que définie dans l'invention*

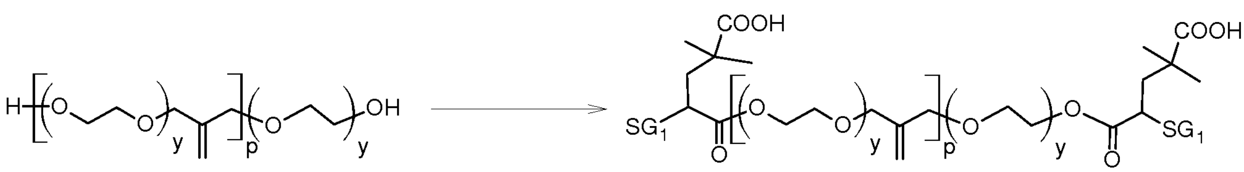

26,5 g de poly(oxyde d'éthylène) réticulable tel que préparé précédemment ont été mis à réagir, à température ambiante, pendant 15h, avec 7,4 g de chlorure d'acryloyle en présence de 8 g de triéthylamine dans 200 ml de tétrahydrofurane. Les fonctions hydroxyles terminales ont ainsi été fonctionnalisées par des fonctions acrylates. Le résidu obtenu a été précipité dans l'éther diéthylique, filtré puis séché sous vide.

Ensuite, 2 g d'alcoxyamine de formule MAMA-SG1 a été additionné au diacrylate tel qu'obtenu précédemment, à 80°C dans 50 ml d'éthanol sous atmosphère inerte. Après 4h de réaction, le produit obtenu a été précipité dans l'éther diéthylique, filtré, puis séché sous vide.

Copolymérisation du poly(oxyde d'éthylène) réticulable, précurseur du bloc A, avec le styrène-sulfonyl(trifluorométhylsulfonyl)imide de lithium (STFSILi) pour former le copolymère tri-bloc BAB : étape ii) telle que définie dans l'invention

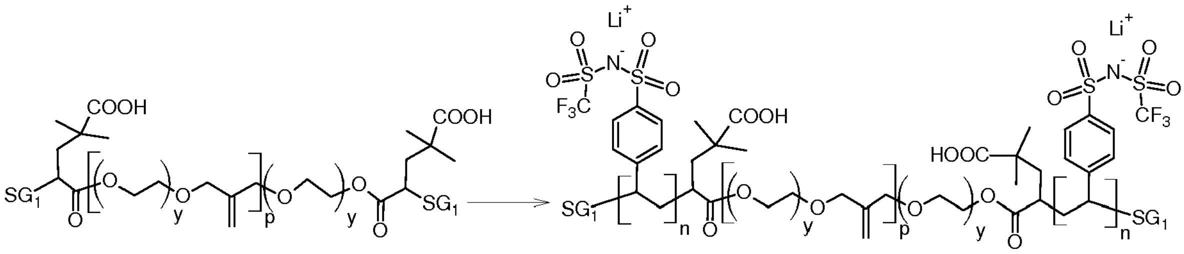

5 g de poly(oxyde d'éthylène) réticulable contenant un amorceur tel que préparé précédemment dans 30 ml de DMF ont été mis à réagir avec 1 g de styrène-sulfonyl(trifluorométhylsulfonyl)imide de lithium (STFSILi) et 7 mg de nitroxyde SG1 sous atmosphère inerte à 120°C. Au bout de 16h de réaction, environ 80% du monomère STFSILi a réagi.

Le styrène-sulfonyl(trifluorométhylsulfonyl)imide de lithium (STFSILi) peut être préparée comme cela est décrit dans la demande internationale WO 2013/034848 A1.

Le copolymère obtenu a été précipité dans l'éther diéthylique, puis purifié par dialyse dans l'eau (seuil de coupure à 3 $kg.mol^{-1}$) avant d'être séché par lyophilisation.

On a obtenu un copolymère tri-bloc BAB **CP-1** conforme à l'invention comprenant 13,1% en masse de PSTFSILi, par rapport à la masse totale du copolymère. Ce copolymère a un rapport OE/Li de 48,4.

Réticulation et mise en forme du copolymère

100 mg de copolymère tel que préparé précédemment a été mis en solution dans 5 ml d'un mélange acétonitrile/eau (5/1 en volume). 0,9 mg de photoamorceur UV (2-Hydroxy-4'-(2-hydroxyéthoxy)-2-méthylpropiophénone) ont été introduits dans la solution. La solution résultante a été ensuite versée dans une boite de Pétri en polypropylène (6 cm de diamètre) placée sur une surface plane. La majeure partie du solvant a été évaporée dans une étuve à 40°C pendant 24h, puis à 60°C pendant 12h. Puis le film polymère obtenu a été réticulé sous une lampe mercure UV vendue sous la dénomination commerciale P300 MT Power supply par Fusion UV system Inc. pendant 30 secondes à 15 $mW/cm^2$ sous atmosphère ambiante. Le film obtenu a été séché dans la boite à gants pour former un copolymère réticulé conforme à l'invention **$CP_r$-1** comprenant 13,1% en masse de PSTFSILi, par rapport à la masse totale du copolymère, et un rapport OE/Li de 48,4.

Obtention d'autres copolymères

En modifiant la quantité de monomère STFSILi, d'autres copolymères réticulés **$CP_r$-2** et **$CP_r$-3** ; et non réticulés **CP-2** et **CP-3** ont été obtenus.

Le tableau 1 ci-dessous répertorie la composition des copolymères obtenus :

**TABLEAU 1**

| Copolymère | % PSTFSI Li | Rapport OE/ Li | réticulation |
|---|---|---|---|
| **CP-1** | 13,1 | 48,4 | non |
| **$CP_r$-1** | 13,1 | 48,4 | oui |
| **CP-2** | 22 | 25,9 | non |
| **$CP_r$-2** | 22 | 25,9 | oui |
| **CP-3** | 28,4 | 18,4 | non |
| **$CP_r$-3** | 28,4 | 18,4 | oui |

**Exemple 2 : préparation d'électrolytes polymères solides conformes au troisième objet de l'invention**

Les copolymères réticulés **$CP_r$-1, $CP_r$-2** et **$CP_r$-3** sous la forme de films ont été trempés dans du TEGDME comme plastifiant pendant 1h dans une salle sèche (point de rosée à -45°C), puis les films obtenus ont été récupérés, et les excès de plastifiant ont été enlevés avec un mouchoir en papier Kimtech. Les films ont été pesés avant et après l'absorption du plastifiant, ce qui permet de déduire le pourcentage de plastifiant dans les films. Les épaisseurs des films vont en moyenne de 30 à 60 $\mu$m.

Le tableau 2 ci-dessous représente la composition des électrolytes polymères solides obtenus :

**TABLEAU 2**

| Electrolyte polymère solide | % massique TEGDME | Copolymère | Rapport OE/ Li |
|---|---|---|---|
| **E-1a** | 14 | **$CP_r$-1** | 59 |
| **E-1b** | 12,3 | **$CP_r$-1** | 57 |
| **E-2a** | 22,8 | **$CP_r$-2** | 40 |
| **E-2b** | 17,4 | **$CP_r$-2** | 35 |
| **E-2c** | 14,5 | **$CP_r$-2** | 33 |
| **E-3a** | 23,4 | **$CP_r$-3** | 30 |
| **E-3b** | 21,3 | **$CP_r$-3** | 28 |
| **E-3c** | 16 | **$CP_r$-3** | 24 |
| **E-3d** | 18,7 | **$CP_r$-3** | 26 |

**Exemple 3 : caractérisations physico-chimiques**

Module de Young

Le module de Young (module d'élasticité) a été calculé à partir des courbes de traction contrainte *vs* allongement obtenues grâce à un analyseur mécanique dynamique vendu sous la dénomination commerciale Dynamic Mechanical Analyzer DMA Q800, par la société TA Instruments, et ce à 50°C, avec un balayage d'air sec.

La figure 1 annexée montre le module de Young (en MPa), en fonction du taux massique de PSTFSILi dans le copolymère réticulé (en %) (courbe avec les ronds vides, copolymères **$CP_r$-1, $CP_r$-2** et **$CP_r$-3**), dans le copolymère non réticulé (courbe avec les ronds pleins, copolymères **CP-1, CP-2** et **CP-3)** et dans un mélange de copolymère réticulé et de plastifiant TEGDME (courbe avec les carrés pleins, électrolytes **E-1b, E-2b** et **E-3b).** La figure 1 montre tout d'abord que la réticulation du bloc A dans le copolymère tri-bloc BAB a un impact important sur le module de Young puisqu'une augmentation d'un facteur 3 à 5 est obtenue pour un même taux massique de PSTFSILi (e.g. de 0,46 MPa à 1,7 MPa pour le copolymère comprenant 28,4% en poids de PSTFSILi). Par ailleurs, cette réticulation permet d'obtenir une tenue mécanique suffisante pour pouvoir associer le copolymère réticulé conforme à l'invention à un plastifiant. En particulier, la plastification augmente la conductivité ionique, tout en garantissant un module de Young tout à fait acceptable. On obtient ainsi un bon compromis conductivité ionique/tenue mécanique à 50°C pour les électrolytes polymères solides **E-1b, E-2b** et **E-3b.** Enfin, on peut moduler la tenue mécanique du copolymère en fonction du taux massique de PSTFSILi dans le copolymère réticulé.

Conductivité ionique

La conductivité ionique a été calculée selon la formule suivante :

$$\sigma = \frac{l}{S * R_{el}}$$

où S et l sont respectivement la surface et l'épaisseur de l'électrolyte polymère solide ou du copolymère. $R_{el}$ est la résistance de l'électrolyte polymère solide ou du copolymère déterminée à haute fréquence par spectroscopie d'impédance (VMP300, Bio-Logic) sur une cellule symétrique Li/électrolyte polymère solide ou copolymère/Li. La température

est fixée par le moyen d'une enceinte climatique entre 10 et 80°C.

La figure 2 annexée montre la variation de la conductivité ionique (en S/cm) en fonction du rapport 1000/T, T étant la température en Kelvin, pour les copolymères non réticulés **CP-2** (courbe avec les ronds pleins) et **CP-3** (courbe avec les triangles pleins), pour les copolymères réticulés **$CP_r$-2** (courbe avec les ronds vides) et **$CP_r$-3** (courbe avec les triangles vides), et pour les électrolytes polymères solides **E-2c** (courbe avec les carrés pleins) et **E-3c** (courbe avec les carrés vides).

La figure 2 montre que les copolymères sans plastifiant présentent une conductivité de 4 à $8*10^{-6}$ S/cm à 60°C, ce qui est trop faible pour une utilisation en batterie, notamment à fort régime et fort grammage de l'électrode positive (e.g. > 0,8 mAh/$cm^2$). La plastification par une faible quantité de plastifiant permet d'atteindre une conductivité de $1,3*10^{-5}$ S/cm, sans compromettre la stabilité mécanique du copolymère réticulé.

Les figures 3 et 4 montrent respectivement la température de transition vitreuse en °C (figure 3) et la température de fusion en °C (figure 4) en fonction du taux massique de PSTFSILi, pour le copolymère réticulé (courbe avec les ronds vides, copolymères **$CP_r$-1, $CP_r$-2** et **$CP_r$-3**), pour le copolymère non réticulé (courbe avec les ronds pleins, copolymères **CP-1, CP-2** et **CP-3**), et pour l'électrolyte polymère solide (courbe avec les carrés pleins, électrolytes **E-1a, E-2a** et **E-3a).**

Les températures de transition vitreuse et de fusion ont été obtenues par mesure des propriétés thermodynamiques par DSC à l'aide d'un appareil vendu sous la dénomination commerciale DSC3 par Mettler-Toledo. Les mesures ont été effectuées avec les paramètres suivants : 10°C/min entre -110°C et 130°C.

Les figures 3 et 4 montrent respectivement une forte baisse de la température de transition vitreuse et de la température de fusion pour l'électrolyte polymère solide, par rapport à celles des copolymères réticulés et non réticulés. De telles températures sont adaptées pour obtenir un électrolyte ayant une bonne conduction ionique à basse température (polymère moins cristallin), et pouvant être mis en œuvre dans une batterie à une température plus basse.

**Exemple 4 : caractérisations électrochimiques**

4.1 Préparation d'une électrode positive composite

Une électrode positive composite sous la forme d'un film a été préparée de la façon suivante : un mélange de 46,3 g de $LiFePO_4$, 1,2 g de noir de carbone, 17,5 g de copolymère **CP-3,** 6,5 g d'eau déionisée ont été introduits dans un Plastograph brabender. Le mélange a été effectué à 60°C à 80 tours par minutes.

La pâte ainsi obtenue a été ensuite laminée à 60°C sur un collecteur de courant en aluminium revêtu de carbone. Le film obtenu a été séché 10 minutes à 100°C avant d'être utilisé.

L'électrode positive composite obtenue comprend 71,2% en masse de matière active LFP, 26,9% en masse de copolymère **CP-3** et 1,9% en masse de noir de carbone. Elle présente une épaisseur de 45 μm environ. Le grammage obtenu est de 1,37 mAh/$cm^2$.

Un accumulateur LMP a été préparé par assemblage sous atmosphère contrôlée (point de rosée -50°C) :

- d'un film d'électrolyte polymère solide **E-3d** tel que préparé précédemment d'épaisseur 58,8 μm,
- d'une feuille de lithium métal d'épaisseur 50 μm environ, et
- d'une électrode positive telle que preparée précédemment.

Pour ce faire, la feuille de lithium et le film d'électrolyte polymère solide sont laminés à 70°C et à 5 bars pour assurer de bons contacts Li/électrolyte, puis enfin l'électrode positive composite est laminée sur l'ensemble Li/électrolyte pour former l'accumulateur. Le film d'électrolyte est disposé entre le film métallique en lithium et le film d'électrode positive composite. Un fil conducteur est connecté au lithium et un autre fil conducteur est connecté au collecteur de courant de l'électrode positive composite.

L'accumulateur obtenu ayant une structure de type sandwich est confinée sous vide dans une pochette (bien connue selon l'anglicisme « *coffee bag* ») pour être testée sous atmosphère non contrôlée.

Un accumulateur sous une pression de 1 bar et une surface de 2,8 $cm^2$ a été obtenu.

Au cours du fonctionnement de l'accumulateur, le TEGDME contenu dans l'électrolyte polymère solide migre au moins partiellement dans l'électrode positive composite, notamment jusqu'à ce que l'équilibre soit atteint entre la quantité de TEGDME dans l'électrode positive composite, d'une part, et dans l'électrolyte polymère solide, d'autre part.

La figure 5 montre la tension de l'électrode positive composite en volts en fonction de la capacité en décharge (en mAh) à 60°C et à différents régimes (de D/9,4 à D/0,9), la charge étant toujours de C/9,4. D représente la capacité nominale en mAh et D/n un courant de décharge correspondant à l'obtention de la capacité D en n heures. La polarisation est proportionnelle à la densité de courant appliquée, ce qui est typique pour les polymères de type single-ion car le transport des ions est assuré uniquement par migration. Ainsi les valeurs de capacité obtenues sont fortement dépendantes de la borne d'arrêt à bas potentiel.

La figure 6 représente la courbe de la capacité en décharge (en mAh) et l'efficacité coulombique (en %), en fonction du nombre de cycles, à 60°C et à différents régimes de décharge (de D/9,4 à D/0,9), la charge étant toujours de C/9,4. Une très bonne tenue en cyclage sur plus de 60 cycles associée à un rendement faradique de 98,4% sont obtenus.

La figure 7 montre la comparaison des performances en puissance de deux batteries LMP :

- une première batterie LMP (courbe avec les losanges vides) fonctionnant à 60°C comprenant un électrolyte polymère solide E-3d et une électrode positive composite telle que définie précédemment, et
- une deuxième batterie LMP utilisée actuellement en industrie (courbe avec les ronds pleins) fonctionnant à 80°C comprenant un électrolyte polymère solide incluant 48% en masse d'homo-POE, 12% en masse de sel de lithium LiTFSi, et 40% en masse de PVdF-co-HFP, et une électrode positive contenant 68% en masse de matière active LFP, 24% en masse d'homo-POE, 6% en masse de sel de lithium LiTFSi, et 2% en masse de noir de carbone et ayant une épaisseur de 60 $\mu$m environ et un grammage de 1,5 mAh/cm$^2$.

La figure 7 montre la capacité en décharge normalisée par la capacité nominale ($D/D_0$) en fonction du régime de décharge (D/n) pour les batteries précitées.

Les résultats obtenus sont remarquables, compte tenu de l'épaisseur de l'électrolyte polymère solide (58,8 $\mu$m), du grammage très élevé de l'électrode (1,37 mAh/cm$^2$), pour une électrode positive composite non-plastifiée initialement. Ils montrent que les électrolytes polymères solides de l'invention ont des performances supérieures à celles des électrolytes commerciaux à forts régimes et égales à faibles régimes de cyclage.

## Revendications

**1.** Copolymère réticulé, **caractérisé en ce qu'**il comprend au moins des unités récurrentes de polystyrène-sulfonyl(trifluorométhylsulfonyl)imide de lithium (PSTFSILi) et au moins des unités récurrentes de poly(oxyde d'alkylène) choisies parmi des unités de poly(oxyde d'éthylène), des unités de poly(oxyde de propylène), des unités de poly(oxyde d'éthylène et de propylène), et un de leurs mélanges, et **en ce que** ledit copolymère réticulé est obtenu par réticulation d'un copolymère tri-bloc de type BAB, dans lequel :

- le bloc A est un poly(oxyde d'alkylène) réticulable susceptible d'être obtenu à partir :

  * d'au moins un monomère choisi parmi l'éthylène glycol, le propylène glycol, et leur mélange, ou d'au moins un oligomère de poly(oxyde d'alkylène) choisi parmi les poly(oxyde d'éthylène), les poly(oxyde de propylène), les poly(oxyde d'éthylène et de propylène), et un de leurs mélanges,
  et
  * d'au moins un composé comprenant au moins une fonction réticulable alcène ou alcyne, et

- chacun des blocs B est un polystyrène anionique substitué par l'anion d'un sel de sulfonyl(trifluorométhylsulfonyl)imidure de lithium (TFSILi) et répondant à la formule (I) suivante :

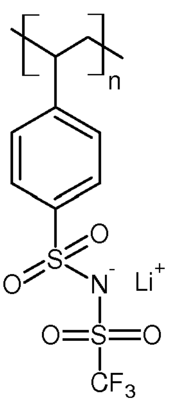

**(I)**

dans laquelle n désigne le nombre de motifs de styrènesulfonyl(trifluorométhylsulfonyl)imide de lithium pour chacun des blocs B.

2. Copolymère réticulé selon la revendication 1, **caractérisé en ce qu'**il comprend de 10 à 50% en masse de PSTFSILi, par rapport à la masse totale du copolymère réticulé.

3. Copolymère réticulé selon la revendication 1 ou 2, **caractérisé en ce que** le bloc A a une masse moléculaire moyenne en nombre inférieure ou égale à 25 kDa.

4. Copolymère réticulé selon l'une quelconque des revendications précédentes, **caractérisé en ce que** le bloc A comprend un polymère fonctionnel de formule (II) suivante :

$$-[COA\text{-}R^1]_p- \quad (II)$$

dans laquelle $R^1$ est un substituant comprenant au moins une fonction réticulable alcène ou alcyne ; COA est une chaine poly(oxyde d'alkylène) choisie parmi les chaines poly(oxyde d'éthylène), poly(oxyde de propylène), poly(oxyde d'éthylène et de propylène), et un de leurs mélanges ; et p est compris entre 10 et 50.

5. Copolymère réticulé selon la revendication 4, **caractérisé en ce que** le polymère fonctionnel de formule (II) répond à la formule (II-a) suivante :

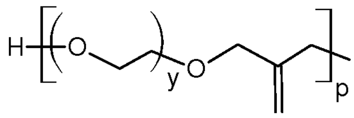

**(II-a)**

dans laquelle y est compris entre 11 et 91.

6. Copolymère réticulé selon l'une quelconque des revendications précédentes, **caractérisé en ce que** le rapport du nombre de moles d'oxyde d'alkylène sur le nombre de moles de STFSILi (OA/Li) va de 7 à 65.

7. Copolymère réticulé selon l'une quelconque des revendications précédentes, **caractérisé en ce que** le composé comprenant une fonction réticulable alcène ou alcyne est choisi parmi les composés de formule (IV) suivante :

$$X\text{-}R'^1\text{-}X' \quad (IV)$$

dans laquelle $R'^1$ est un groupe alkyle comprenant au moins une fonction alcène ou alcyne, ledit groupe alkyle comprenant de 4 à 10 atomes de carbone ; et X et X', identiques ou différents, sont choisis indépendamment l'un de l'autre, parmi les fonctions halogène, acide carboxylique, chlorure d'acide, ester et aldéhyde.

8. Copolymère réticulé selon l'une quelconque des revendications précédentes, **caractérisé en ce que** le composé comprenant une fonction réticulable alcène ou alcyne est le 3-chloro-2-chloro-1-propène.

9. Copolymère réticulé selon l'une quelconque des revendications précédentes, **caractérisé en ce que** l'oligomère d'(oxyde d'alkylène) a une masse molaire allant de 700 à 4000 g/mol.

10. Utilisation d'au moins un copolymère réticulé tel que défini à l'une quelconque des revendications précédentes, pour la préparation d'un électrolyte polymère solide.

11. Électrolyte polymère solide, **caractérisé en ce qu'**il comprend au moins un copolymère réticulé tel que défini à l'une quelconque des revendications 1 à 9, et au moins un plastifiant.

12. Électrolyte polymère solide selon la revendication 11, **caractérisé en ce que** le plastifiant est choisi parmi les carbonates linéaires et cycliques ; les carbonates fluorés ; les nitriles ; les lactones ; les polyéthers linéaires ou cycliques liquides ; les polyéthers fluorés ; et un de leurs mélanges.

**13.** Électrolyte polymère solide selon la revendication 11 ou 12, **caractérisé en ce que** le plastifiant est un polyéther linéaire ou cyclique liquide de masse molaire inférieure ou égale à 10 000 $g \cdot mol^{-1}$, choisi parmi :

* les polyéthylènes glycols de formule $H-[O-CH_2-CH_2]_q-OH$, dans laquelle q est compris entre 1 et 13,
* les éthers de glycol de formule $R^7-[O-CH_2-CH_2]_{q'}-O-R^{7'}$, dans laquelle q' est compris entre 1 et 13 et $R^7$ et $R^{7'}$, identiques ou différents, sont des groupes alkyle linéaires, ramifiés ou cycliques,
* les éthers de formule $R^8-[CH_2-O]_{q''}-R^{8'}$, dans laquelle q" est compris entre 1 et 13, $R^8$ et $R^{8'}$, identiques ou différents, sont des groupes alkyle linéaires, ramifiés ou cycliques,
* les éthers cycliques, les polyéthers cycliques, et
* un de leurs mélanges.

**14.** Électrolyte polymère solide selon l'une quelconque des revendications 11 à 13, **caractérisé en ce qu'**il comprend de 10 à 40% en masse de plastifiant, par rapport à la masse totale de l'électrolyte polymère solide.

**15.** Batterie comprenant :

- une électrode négative comprenant du lithium métal ou un alliage de lithium métal,
- une électrode positive, éventuellement supportée par un collecteur de courant, et
- un électrolyte polymère solide positionné entre l'électrode positive et l'électrode négative,

**caractérisée en ce que** l'électrolyte polymère solide est tel que défini à l'une quelconque des revendications 11 à 14.

**16.** Batterie selon la revendication 15, **caractérisée en ce que** l'électrode positive composite comprend :

- au moins une matière active d'électrode positive,
- au moins un liant polymère, et
- éventuellement au moins un agent de conduction électronique, et
- éventuellement au moins un plastifiant,

ledit liant polymère étant un copolymère tri-bloc BAB tel que défini dans la revendication 1.

## Patentansprüche

**1.** Vernetztes Copolymer, **dadurch gekennzeichnet, dass** es mindestens wiederkehrende Einheiten von Lithiumpolystyrolsulfonyl(trifluormethylsulfonyl)imid (PSTFSILi) und mindestens wiederkehrende Einheiten von Polyalkylenoxid, ausgewählt aus Poly(ethylenoxid)-Einheiten, Poly(propylenoxid)-Einheiten, Poly(ethylen- und propylenoxid)-Einheiten, und einer Mischung davon, umfasst, und dadurch, dass das vernetzte Copolymer durch Vernetzen eines Triblock-Copolymers vom BAB-Typ erhältlich ist, wobei:

- der Block A ein vernetzbares Poly(alkylenoxid) ist, das aus folgendem Material erhältlich ist:

  * mindestens einem Monomer ausgewählt aus Ethylenglykol, Propylenglykol, und einer Mischung davon, oder mindestens einem Poly(alkylenoxid)-Oligomer, ausgewählt aus Poly(ethylenoxid), Poly(propylenoxid), Poly(ethylen- und propylenoxid), und einer Mischung davon,
  und
  * mindestens einer Verbindung, die mindestens eine vernetzbare Alken- oder Alkinfunktion umfasst, und

- wobei jeder der Blöcke B ein anionisches Polystyrol ist, das mit dem Anion eines Salzes von Lithiumsulfonyl(trifluormethylsulfonyl)imid (TFSILi) substituiert ist und folgende Formel (I) aufweist:

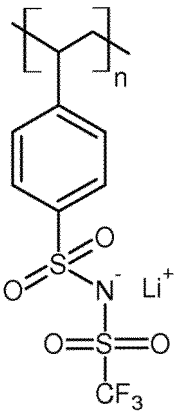

**(I)**

worin n die Anzahl der Styrol-Lithiumsulfonyl(trifluormethylsulfonyl)imidEinheiten für jeden der Blöcke B bezeichnet.

2. Vernetztes Copolymer nach Anspruch 1, **dadurch gekennzeichnet, dass** es 10 bis 50 Gew.-% PSTFSILi, bezogen auf das Gesamtgewicht des vernetzten Copolymers, umfasst.

3. Vernetztes Copolymer nach Anspruch 1 oder 2, **dadurch gekennzeichnet, dass** der Block A ein mittleres Molekulargewicht von 25 kDa oder weniger besitzt.

4. Vernetztes Copolymer nach einem der vorhergehenden Ansprüche, **dadurch gekennzeichnet, dass** der Block A ein funktionelles Polymer der folgenden Formel (II) umfasst:

$$-[COA-R^1]_p- \qquad (II)$$

worin $R^1$ ein Substituent ist, der mindestens eine vernetzbare Alken- oder Alkinfunktion umfasst; COA eine Poly(alkylenoxid)-Kette ist, die aus Poly(ethylenoxid)-, Poly(propylenoxid)-, Poly(ethylen- und propylenoxid)-Ketten, und einer Mischung davon, ausgewählt ist; und p im Bereich von 10 bis 50 liegt.

5. Vernetztes Copolymer nach Anspruch 4, **dadurch gekennzeichnet, dass** das funktionelle Polymer der Formel (II) die folgende Formel (II-a) aufweist:

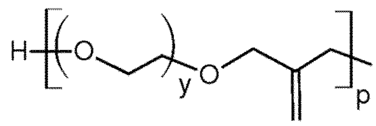

**(II-a)**

worin y im Bereich von 11 bis 91 liegt.

6. Vernetztes Copolymer nach einem der vorhergehenden Ansprüche, **dadurch gekennzeichnet, dass** das Verhältnis der Molzahl von Alkylenoxid zu der Molzahl von STFSILi (OA/Li) 7 bis 65 beträgt.

7. Vernetztes Copolymer nach einem der vorhergehenden Ansprüche, **dadurch gekennzeichnet, dass** die Verbindung, die eine vernetzbare Alken- oder Alkinfunktion umfasst, aus den Verbindungen der folgenden Formel (IV) ausgewählt ist:

$$X-R'^1-X' \qquad (IV)$$

worin $R'^1$ eine Alkylgruppe ist, die mindestens eine Alken- oder Alkinfunktion umfasst, wobei die Alkylgruppe 4 bis 10 Kohlenstoffatome umfasst; und X und X', die gleich oder verschieden sind, unabhängig voneinander ausgewählt

sind aus Halogen-, Carbonsäure-, Säurechlorid-, Ester- und Aldehyd-Funktionen.

8. Vernetztes Copolymer nach einem der vorhergehenden Ansprüche, **dadurch gekennzeichnet, dass** die Verbindung, die eine vernetzbare Alken- oder Alkinfunktion umfasst, 3-Chlor-2-chlor-1-propen ist.

9. Vernetztes Copolymer nach einem der vorhergehenden Ansprüche, **dadurch gekennzeichnet, dass** das Alkylenoxid-Oligomer eine Molmasse von 700 bis 4000 g/mol besitzt.

10. Verwendung von mindestens einem vernetzten Copolymer nach einem der vorhergehenden Ansprüche zur Herstellung eines festen Polymerelektrolyten.

11. Fester Polymerelektrolyt, **dadurch gekennzeichnet, dass** dieser mindestens ein vernetztes Copolymer nach einem der Ansprüche 1 bis 9 und mindestens einen Weichmacher enthält.

12. Fester Polymerelektrolyt nach Anspruch 11, **dadurch gekennzeichnet, dass** der Weichmacher ausgewählt ist aus linearen und zyklischen Carbonaten, fluorierten Carbonaten, Nitrilen, Lactonen, linearen oder zyklischen flüssigen Polyethern, fluorierten Polyethern, und einer Mischung davon.

13. Fester Polymerelektrolyt nach Anspruch 11 oder 12, **dadurch gekennzeichnet, dass** der Weichmacher ein linearer oder zyklischer flüssiger Polyether mit einer Molmasse von 10.000 $g{\cdot}mol^{-1}$ oder weniger ist, ausgewählt aus:

   * Polyethylenglykolen der Formel $H-[O-CH_2-CH_2]_q-OH$, worin q im Bereich von 1 bis 13 liegt,
   * Glykolethern der Formel $R^7-[O-CH_2-CH_2]_{q'}-O-R^{7'}$, worin q' im Bereich von 1 bis 13 liegt und $R^7$ und $R^{7'}$, die gleich oder verschieden sind, lineare, verzweigte oder zyklische Alkylgruppen sind,
   * Ethern der Formel $R^8-[CH_2-O]_{q''}-R^{8'}$, worin q" im Bereich von 1 bis 13 liegt, $R^8$ und $R^{8'}$, die gleich oder verschieden sind, lineare, verzweigte oder zyklische Alkylgruppen sind,
   * zyklischen Ethern, zyklischen Polyethern, und
   * einer Mischung davon.

14. Fester Polymerelektrolyt nach einem der Ansprüche 11 bis 13, **dadurch gekennzeichnet, dass** dieser 10 bis 40 Gew.-% Weichmacher, bezogen auf die Gesamtmasse des festen Polymerelektrolyten, enthält.

15. Batterie, umfassend:

   - eine negative Elektrode, die Lithiummetall oder eine Lithiummetall-Legierung aufweist,
   - eine positive Elektrode, die optional von einem Stromkollektor unterstützt ist, und
   - einen festen Polymerelektrolyten, der zwischen der positiven Elektrode und der negativen Elektrode positioniert ist,

   **dadurch gekennzeichnet, dass** der feste Polymerelektrolyt wie in einem der Ansprüche 11 bis 14 definiert ausgebildet ist.

16. Batterie nach Anspruch 15, **dadurch gekennzeichnet, dass** die Zusammensetzung der positiven Elektrode aufweist:

   - mindestens ein aktives Material für die positive Elektrode,
   - mindestens ein polymeres Bindemittel und
   - optional mindestens ein Elektronenleitmittel, und
   - optional mindestens einen Weichmacher,

   wobei das polymere Bindemittel ein BAB-Triblock-Copolymer wie in Anspruch 1 definiert ist.

## Claims

1. Cross-linked copolymer, **characterized in that** it comprises at least repeating units of lithium polystyrene-sulfonyl(trifluoromethylsulfonyl)imide (PSTFSILi) and at least repeating units of poly(alkylene oxide) selected from poly(ethylene oxide) units, poly(propylene oxide) units, poly(ethylene and propylene) oxide units, and one of the mixtures thereof, and **in that** said cross-linked copolymer is obtained by cross-linking a triblock copolymer of the BAB type, in which:

- the A block is a cross-linkable poly(alkylene oxide) capable of being obtained from:

  * at least one monomer selected from ethylene glycol, propylene glycol and mixture thereof, or at least one poly(alkylene oxide) oligomer selected from poly(ethylene oxide)s, poly(propylene oxide)s, poly(ethylene and propylene) oxides, and one of the mixtures thereof,
  and
  * at least one compound comprising at least one cross-linkable alkene or alkyne function, and

- each of the B blocks is an anionic polystyrene substituted by the anion of a lithium sulfonyl(trifluoromethylsulfonyl)imide (TFSILi) and corresponding to the following formula (I):

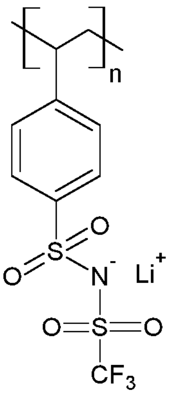

**(I)**

in which n denotes the number of lithium styrenesulfonyl(trifluoromethylsulfonyl)imide for each of the B blocks.

2. Cross-linked copolymer according to claim 1, **characterized in that** it comprises from 10 to 50% by weight PSTFSILi with respect to the total weight of the cross-linked copolymer.

3. Cross-linked copolymer according to claim 1 or 2, **characterized in that** the A block has a number-average molecular weight less than or equal to 25 kDa.

4. Cross-linked copolymer according to any one of the preceding claims, **characterized in that** the A block comprises a functional polymer having the following formula (II):

$$-[CoA-R^1]_p- \qquad (II)$$

in which $R^1$ is a substituent comprising at least one cross-linkable alkene or alkyne function; CoA is a poly(alkylene oxide) chain selected from the poly(ethylene oxide), poly(propylene oxide), poly(ethylene and propylene) oxide chains, and one of the mixtures thereof; and p is comprised between 10 and 50.

5. Cross-linked copolymer according to claim 4, **characterized in that** the functional polymer of formula (II) corresponds to the following formula (II-a):

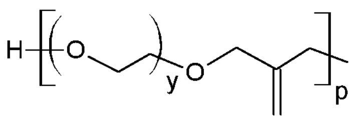

**(II-a)**

in which y is comprised between 11 and 91.

6. Cross-linked copolymer according to any one of the preceding claims, **characterized in that** the ratio of the number of moles of alkylene oxide to the number of moles of STFSILi (AO/Li) ranges from 7 to 65.

**7.** Cross-linked copolymer according to any one of the preceding claims, **characterized in that** the compound comprising a cross-linkable alkene or alkyne function is selected from the compounds having the following formula (IV):

$$X\text{-}R'^{1}\text{-}X' \qquad (IV)$$

in which $R'^1$ is an alkyl group comprising at least one alkene or alkyne function, said alkyl group comprising from 4 to 10 carbon atoms; and X and X', identical or different, are selected independently of one another, from the halogen, carboxylic acid, acyl chloride, ester and aldehyde functions.

**8.** Cross-linked copolymer according to any one of the preceding claims, **characterized in that** the compound comprising a cross-linkable alkene or alkyne function is 3-chloro-2-chloro-1-propene.

**9.** Cross-linked copolymer according to any one of the preceding claims, **characterized in that** the alkylene oxide oligomer has a molar mass ranging from 700 to 4000 g/mol.

**10.** Use of at least one cross-linked copolymer as defined in any one of the preceding claims, for the preparation of a solid polymer electrolyte.

**11.** Solid polymer electrolyte, **characterized in that** it comprises at least one cross-linked copolymer as defined in any one of claims 1 to 9, and at least one plasticizer.

**12.** Solid polymer electrolyte according to claim 11, **characterized in that** the plasticizer is selected from the linear and cyclic carbonates; fluorinated carbonates; nitriles; lactones; liquid linear or cyclic polyethers; fluorinated polyethers; and one of the mixtures thereof.

**13.** Solid polymer electrolyte according to claim 11 or 12, **characterized in that** the plasticizer is a liquid linear or cyclic polyether of molar mass less than or equal to 10000 $g{\cdot}mol^{-1}$, selected from:

* polyethylene glycols of formula $H\text{-}[O\text{-}CH_2\text{-}CH_2]_q\text{-}OH$, in which q is comprised between 1 and 13,
* glycol ethers of formula $R^7\text{-}[O\text{-}CH_2\text{-}CH_2]_{q'}\text{-}O\text{-}R^{7'}$, in which q' is comprised between 1 and 13 and $R^7$ and $R^{7'}$, identical or different, are linear, branched or cyclic alkyl groups,
* ethers of formula $R^8\text{-}[CH_2\text{-}O]_{q''}\text{-}R^{8'}$, in which q" is comprised between 1 and 13, $R^8$ and $R^{8'}$, identical or different, are linear, branched or cyclic alkyl groups,
* the cyclic ethers, the cyclic polyethers, and
* one of the mixtures thereof.

**14.** Solid polymer electrolyte according to any one of claims 11 to 13, **characterized in that** it comprises from 10 to 40% by weight of plasticizer, with respect to the total weight of the solid polymer electrolyte.

**15.** Battery comprising:

- a negative electrode comprising metallic lithium or an alloy of metallic lithium,
- a positive electrode, optionally supported by a current collector, and
- a solid polymer electrolyte positioned between the positive electrode and the negative electrode,

**characterized in that** the solid polymer electrolyte is as defined in any one of claims 11 to 14.

**16.** Battery according to claim 15, **characterized in that** the composite positive electrode comprises:

- at least one positive electrode active material,
- at least one polymer binder, and
- optionally at least one electron conductive agent, and
- optionally at least one plasticizer,

said polymer binder being a BAB triblock copolymer as defined in claim 1.

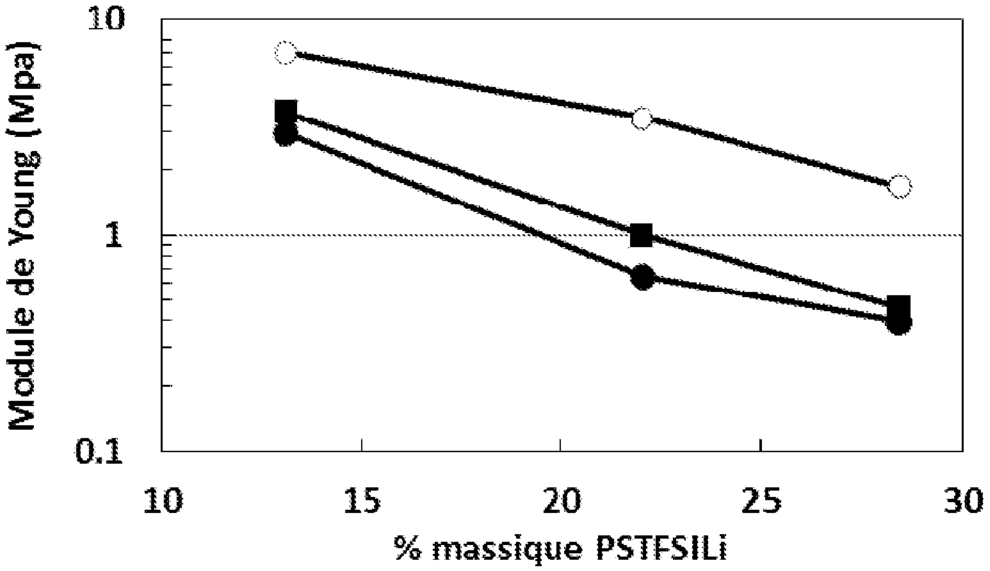
Module de Young (Mpa)
10
1
0.1
10
15
20
25
30
% massique PSTFSILi

FI G.1

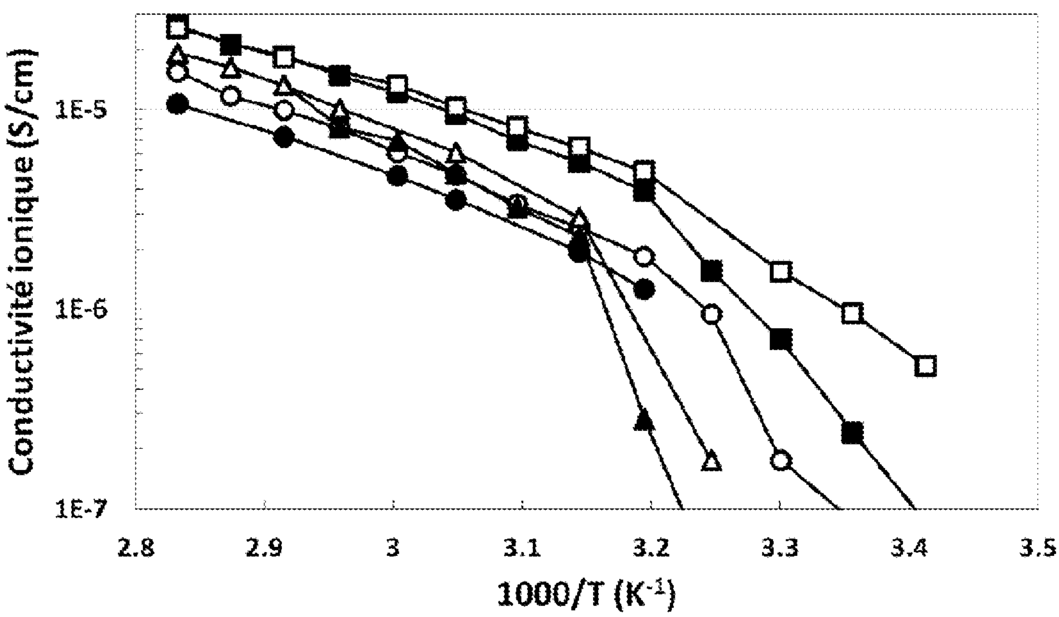
Conductivité ionique (S/cm)
1E-5
1E-6
1E-7
2.8
2.9
3
3.1
3.2
3.3
3.4
3.5
1000/T (K-1)

FI G.2

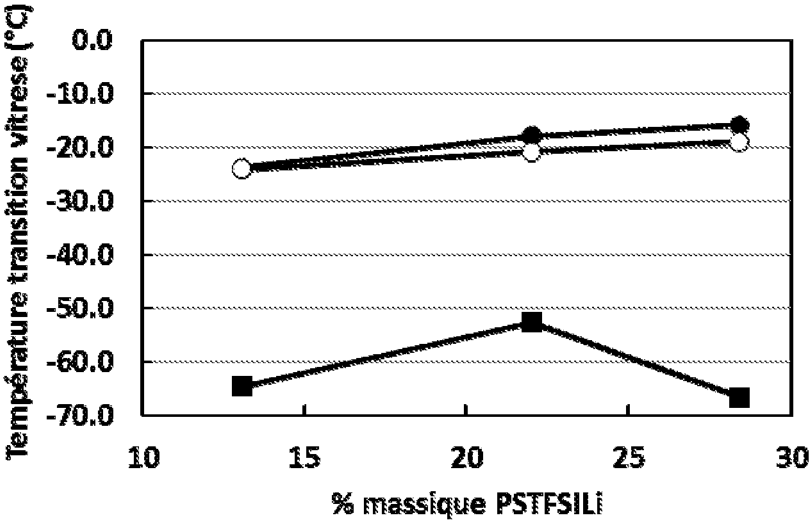
Température transition vitrese (°C)
0.0
-10.0
-20.0
-30.0
-40.0
-50.0
-60.0
-70.0
10
15
20
25
30
% massique PSTFSILi

FI G.3

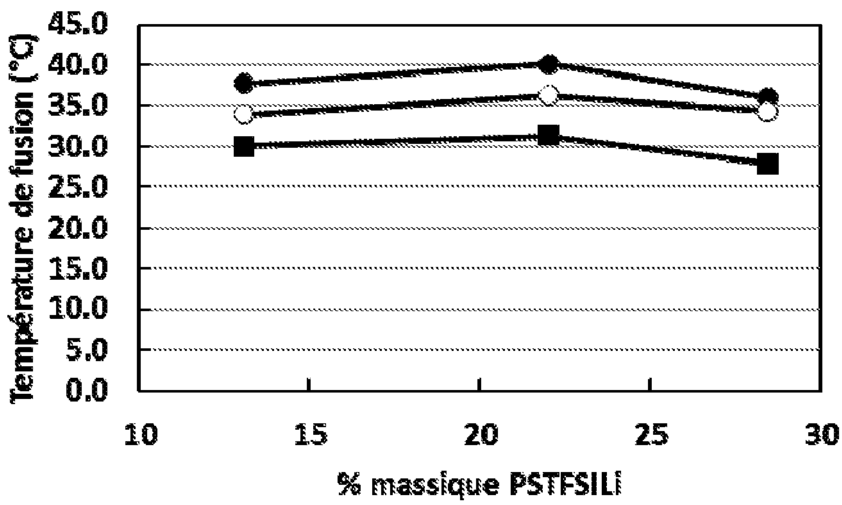
Température de fusion (°C)
45.0
40.0
35.0
30.0
25.0
20.0
15.0
10.0
5.0
0.0
10
15
20
25
30
% massique PSTFSILi

FI G.4

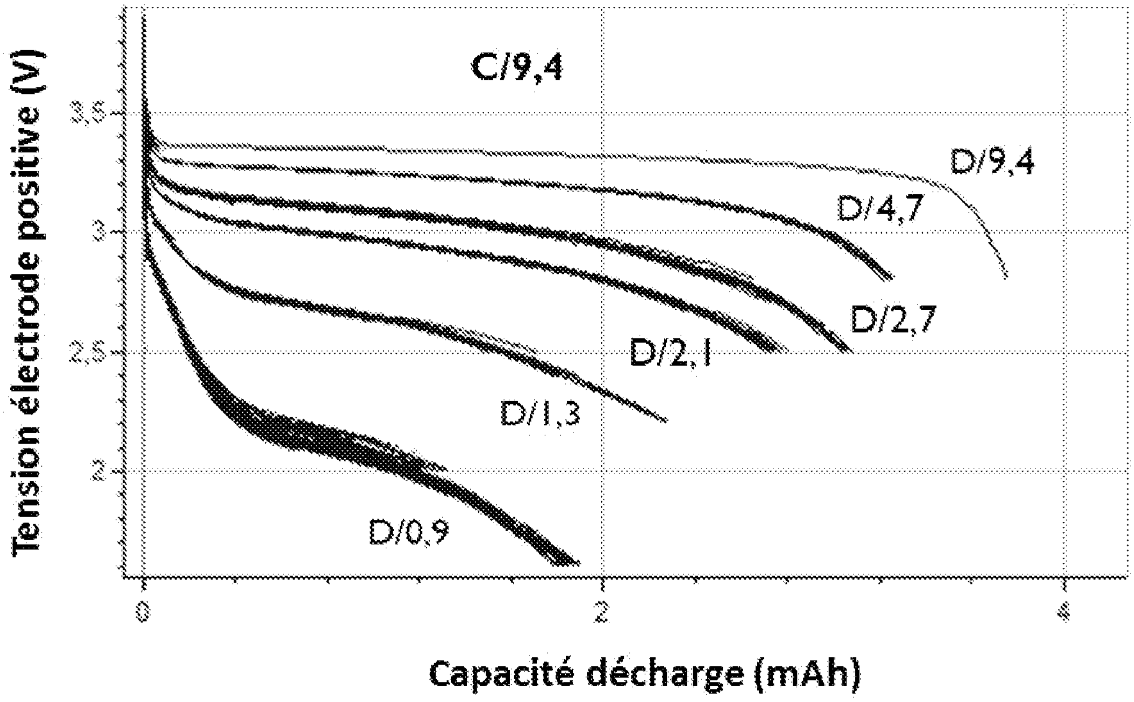
C/9,4
Tension électrode positive (V)
3,5
3
2,5
2
D/9,4
D/4,7
D/2,7
D/2,1
D/1,3
D/0,9
0
2
4
Capacité décharge (mAh)

FI G.5

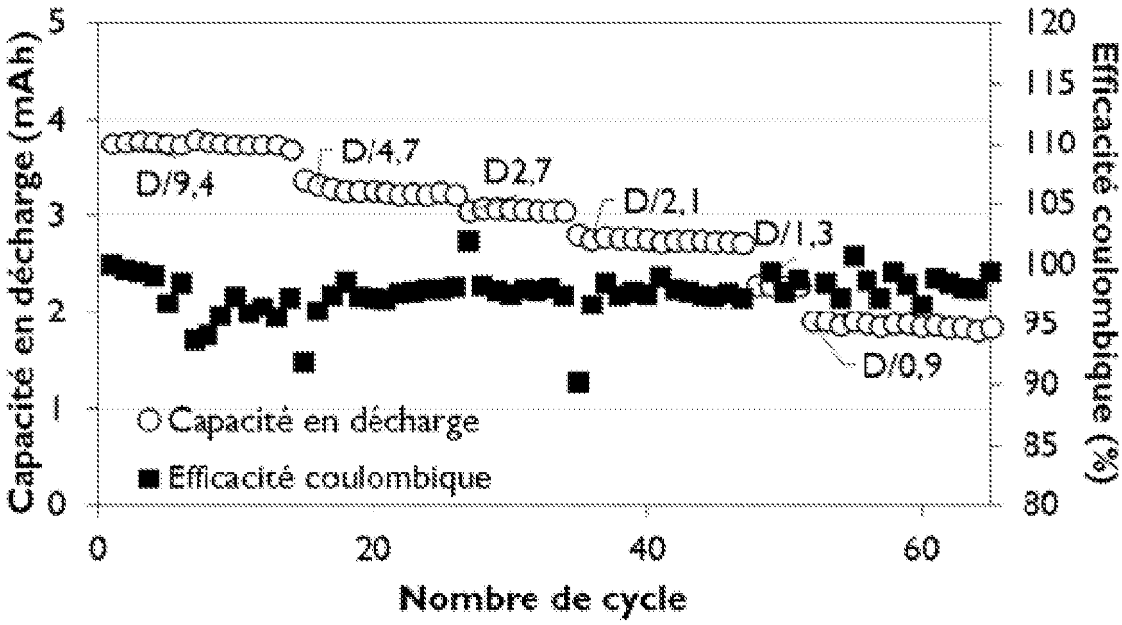
Capacité en décharge (mAh)
Efficacité coulombique (%)
5
4
3
2
1
0
120
115
110
105
100
95
90
85
80
D/9,4
D/4,7
D2,7
D/2,1
D/1,3
D/0,9
○ Capacité en décharge
■ Efficacité coulombique
0
20
40
60
Nombre de cycle

FI G.6

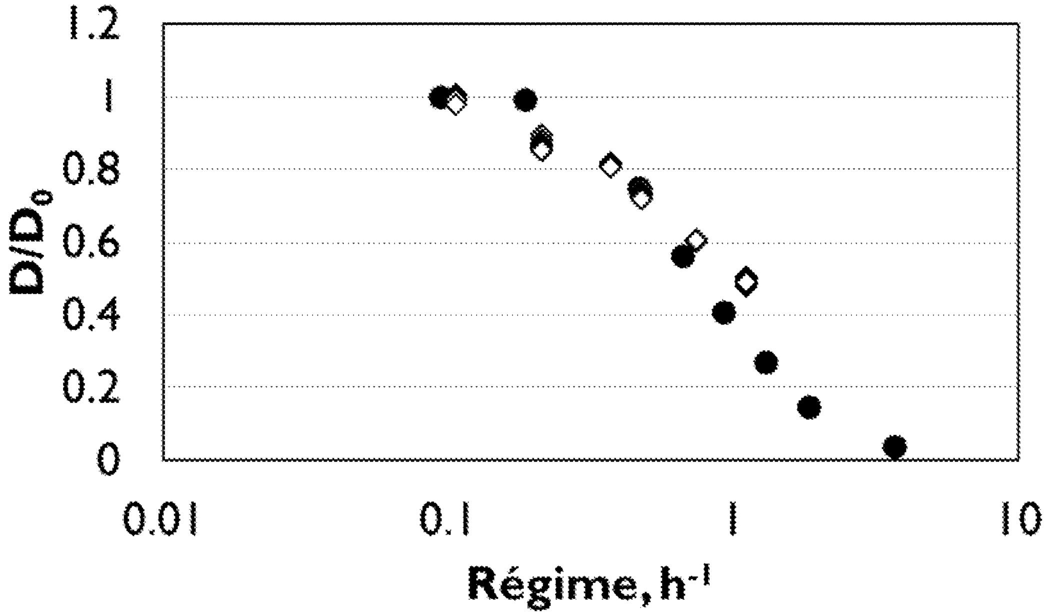


FI G.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2013034848 A
- WO 2013034848 A1